# EUROPÄISCHE PATENTSCHRIFT

(11) **EP 2 851 926 B1**
(45) Veröffentlichungstag und Bekanntmachung des Hinweises auf die Patenterteilung: **08.06.2016**
(21) Anmeldenummer: 14003084.2
(22) Anmeldetag: 08.09.2014
(51) Int. Cl.: H01H 85/20, H02B 1/21

(54) **Isolations-Sicherheitstrennschalter mit wenigstens einem Gehäusekorpus eines Schnellmontage-Moduls**
Safety isolation disconnection switch with at least one housing body of a rapid mounting module
Disjoncteur de sécurité/d'isolation doté d'au moins un corps de boîtier d'un panneau à montage rapide

(30) Priorität: 11.09.2013 PL 40531513
(43) Veröffentlichungstag der Anmeldung: 25.03.2015
(73) Patentinhaber: APATOR S.A., 87-100 Torun (PL)
(72) Erfinder: Latka, Tomasz, PL -87-220 Radzyn Chelminski (PL); Luczak, Robert, 87-800 Wloclawek (PL); Baran, Marcin, 95-080 Tuszyn (PL); Geberle, Damian, 87-100 Torun (PL)
(74) Vertreter: Bischof, Oliver

(56) Entgegenhaltungen:
- DE-A1- 2 515 692
- DE-B3-102004 017 393
- DE-U1- 9 104 212
- DE-U1- 29 509 784

## Beschreibung

Die Erfindung betrifft einen Isolations-Sicherheitstrennschalter mit einem kompletten Unterteil, an dem Anschluss- und L1-Abflussschienen sowie Kontaktabschirmungen und Schnellmontage-Modulen angeordnet sind, wobei die Schnellmontage-Module jeweils aus einem Gehäusekorpus und einer Schraube bestehen.

Bekannt sind Niedervolt-Hochleistungssicherungsleisten (auch: Sicherheitstrennschalter) der eingangs genannten Art, mit Anschlusssitzen, in die manuell Schrauben eingesetzt werden, die zum Befestigen des Sicherheitstrennschalters an einer Schienenbrücke ohne Hilfe von zusätzlichen, stabilisierend haltenden Elementen dienen. Aus DE 10 2004 017 393 B3 ist auch ein Befestigungselement für Niedervolt-Hochleistungssicherungsleiste bekannt, bei dem zum Anschluss an Sammelschienen ein speziell geformter Anschlusswinkel, eine Anschlagplatte und ein Winkelstück vorgesehen sind, die den oben genannten Anschlussschienen entsprechen. Darüber hinaus wird ein mit dem Winkelstück einstückig gefertigter Isolationskörper von komplizierter Form vorgesehen, in den eine Schraube eingesetzt ist.

Die Aufgabe der Erfindung ist, einen Isolations-Sicherheitstrennschalter der eingangs genannten Art zu konzipieren, dessen Schnellmontage-Modul sich durch einen vereinfachten Aufbau auszeichnet.

Diese Aufgabe ist durch einen eingangs als Oberbegriff des Anspruchs 1 beschriebenen Isolations-Sicherheitstrennschalter gelöst, bei dem
- der Gehäusekorpus einen rechteckigen Plattenkörper und einen senkrecht zum Plattenkörper gerichteten Leitkanal zur Aufnahme der Schraube aufweist,
- am Plattenkörper wenigstens ein elastisches Stegelement angebracht ist, welches mit seinem freien Ende mit der Schraube kontaktiert und die Schraube vor dem Herausfallen aus dem Gehäusekorpus sichert.

Das elastische Stegelement kann sich mit seinem freien Ende an einem Kragen, welcher den Schaft der Schraube umgibt, abstützen. Zu diesem Zweck ist ist der Leitkanal von einer Hülse umgeben, an der vorzugsweise zwei Aussparungen eingebracht sind. In die Aussparung greift das freie Ende des Stegelementes ein und stützt sich dabei am Kragen der Schraube ab.

Vorzugsweise verlaufen die Aussparungen entlang der Mantellinie der Hülse und sind an einer diagonal zur Hülse ausgerichteten Symmetrieachse des Plattenkörpers angeordnet.

Die elastischen Stegelemente können direkt mit dem Plattenkörper verbunden sein. Vorzugsweise gehen die Stegelemente jeweils in einen über eine Unterseite des Plattenkörpers ragenden länglichen Vorsprung über, welcher senkrecht zum Stegelement gerichtet ist.

Vorteilhaft ist, dass sowohl die Stegelemente als auch die Hülse stoffschlüssig mit dem Plattenkörper verbunden sind. So lassen sich alle drei Teile kostengünstig in einem Materialstück, vorzugsweise aus Thermoplast, im Spritzgussverfahren herstellen.

Der Gegenstand der Erfindung ist in einem Ausführungsbeispiel anhand der beiliegenden Zeichnung veranschaulicht, deren Figuren zeigen:
- Fig. 1: einen Isolations-Sicherheitstrennschalter, in einer perspektivischen Ansicht,
- Fig. 2: ein komplettes Unterteil, in einer perspektivischen Ansicht,
- Fig. 3: ein Schnellmontage-Modul, in einer perspektivischen Ansicht,
- Fig. 4: ein Gehäusekorpus des Schnellmontage-Moduls, in einer perspektivischen Ansicht,
- Fig. 5: eine Schraube, in einer perspektivischen Ansicht, von der Seite des Inbussitzes her gesehen,
- Fig. 6: die Schraube, in einer perspektivischen Ansicht, im Verhältnis zu Fig. 5 um 180° gedreht.

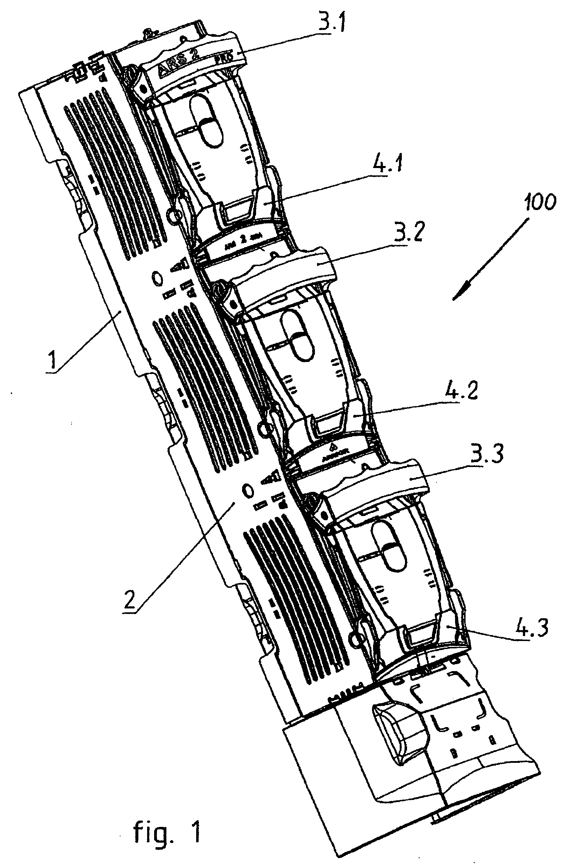

Ein Isolations-Sicherheitstrennschalter 100 (vgl. Fig. 1) gemäß Erfindung umfasst einen komplettes Unterteil 1, ein komplettes Gehäuse 2, drei komplette Antriebe 3.1, 3.2, 3.3 und drei komplette Deckel 4.1, 4.2, 4.3.

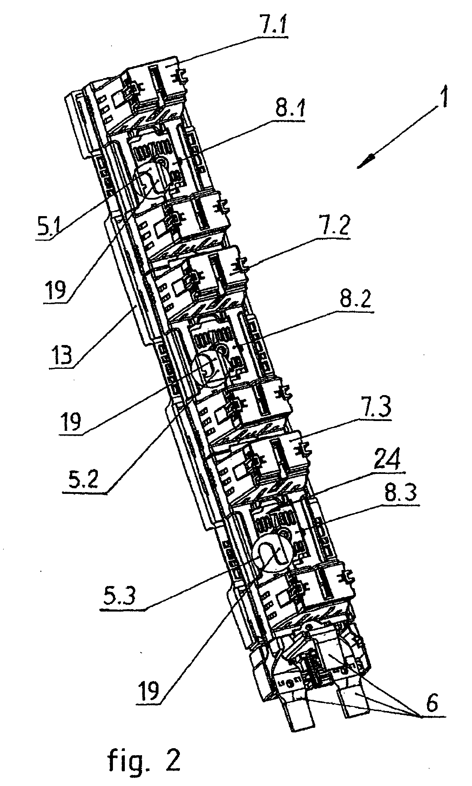

Das komplette Unterteil 1 (vgl. Fig. 2) setzt sich aus einem Basisteil 13, drei unteren Anschlussschienen 5.1, 5.2, 5.3, drei L1-Abflussschienen 6, drei Kontaktabschirmungen 7.1, 7.2, 7.3 und drei Schnellmontage-Modulen 8.1, 8.2, 8.3 zusammen.

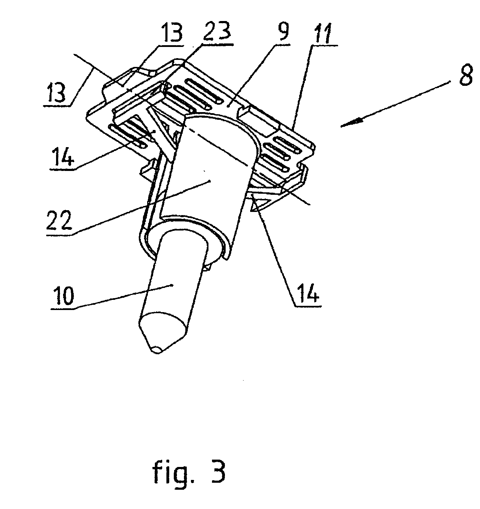

Das vereinfacht mit "8" bezeichnete Schnellmontage-Modul (vgl. Fig. 3) besteht aus einem Gehäusekorpus 9 und einer Schraube 10.

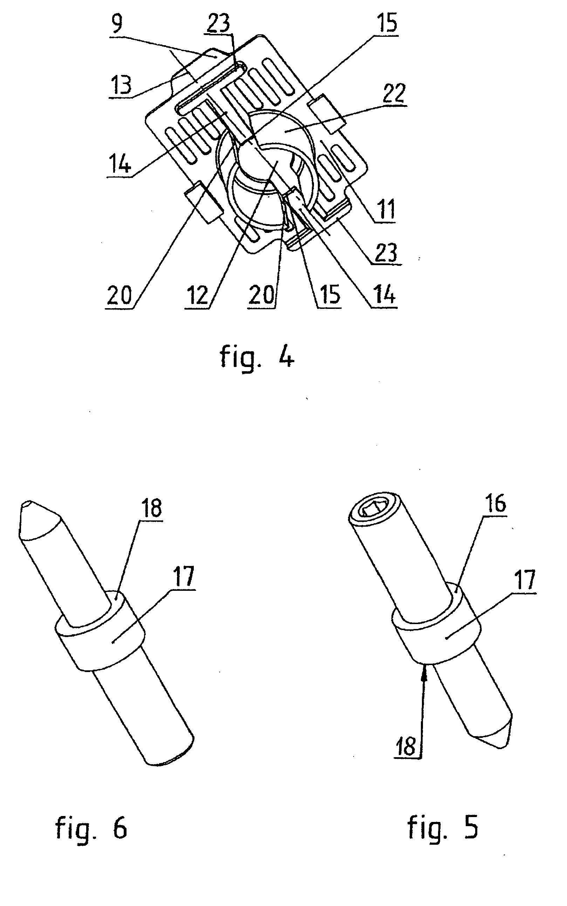

Das Gehäusekorpus 9 des Schnellmontage-Moduls 8 weist einen rechteckigen Plattenkörper 11 und einen senkrecht zum Plattenkörper 11 gerichteten, von einer zweiteiligen Hülse 22 (vgl. Fig. 4) umschlossenen Leitkanal 12 auf, in dem die Schraube 10 angeordnet ist. Die Hülse 22 hat zwei sich gegenüberliegende, längs einer Mantellinie verlaufende Aussparungen 20 von einer Breite, die die Breite eines elastischen Stegelementes 14 nicht unterschreitet.

Wie den Figuren 3 und 4 zu entnehmen ist, sind die beiden Aussparungen 20 in Projektion auf eine Flachseite 24 (vgl. Fig. 2) des Plattenkörpers 11 entlang einer diagonal zur Hülse 22 verlaufenden Symmetrieachse 13 des Plattenkörpers 11 angeordnet.

Die elastischen Stegelemente 14 sind jeweils über einen länglichen Vorsprung 23 mit dem Plattenkörper 11 verbunden. Es handelt sich um eine stoffschlüssige Verbindung. Dabei liegen die über eine Unterseite des Plattenkörpers 11 ragenden Vorsprünge 23 senkrecht zur Längsausrichtung der Stegelemente 14.

Die Stegelemente 14 stützen sich mit ihrem freien Ende 15 jeweils an einem Kragen 17 der Schraube 10 ab.

Die Elastizitäts-Funktion bzw. Eigenschaft des Schnellmontage-Moduls 8 erreicht man auch auf bekannte Weise mit Hilfe einer Feder. Die Aufgabe der elastischen Stegelemente 14 besteht darin, die Schraube 10 zu positionieren und zu verhindern, dass sie aus dem Gehäusekorpus 9 herausfällt, bis die Schraube 10 an einer Schienenbrücke platziert ist. Dies geschieht dadurch, dass sich die freien Enden 15 der elastischen Stegelemente 14 an einer ersten, oberen Fläche 16 (im einmontierten Zustand) des Kragens 17 der Schraube 10 abstützen. Von unten ist die Schraube 10 begrenzt, weil die Schraube 10 mit ihrer unterer Fläche 18 sich an einer zweiten oberen Fläche 19 der unteren Anschlussschiene 5 abstützt.

**Bezugszeichenliste:**

| **Bezugszahl** | **Bezeichnung** | **Figur** |
|---|---|---|
| 1. | komplettes Unterteil | 1 |
| 2. | komplettes Gehäuse | 1 |
| 3.1, 3.2, 3.3 | kompletter Antrieb | 1 |
| 4.1, 4.2, 4.3 | kompletter Deckel | 1 |
| 5.1, 5.2, 5.3 | untere Anschlussschiene | 2 |
| 6. | L1-Abflussschiene | 2 |
| 7.1, 7.2, 7.3 | Kontaktabschirmung | 2 |
| 8 (8.1, 8.2, 8.3) | Schnellmontage-Modul | 2, 3 |
| 9. | Gehäusekorpus | 3, 4 |
| 10. | Schraube | 3, 5, 6 |
| 11. | Plattenkörper | 3, 4 |
| 12. | Leitkanal | 4 |
| 13. | Symmetrieachse | 3, 4 |
| 14. | elastisches Stegelement | 3, 4 |
| 15. | freies Ende (v. 14) | 4 |
| 16. | obere Fläche | 5 |
| 17. | Kragen | 5, 6 |
| 18. | untere Fläche | 5, 6 |
| 19. | obere Fläche | 2 |
| 20. | Aussparung | 4 |
| 22. | Hülse | 3, 4 |
| 23. | Vorsprung | 3, 4 |
| 24. | Flachseite (v. 11) | 2 |

## Patentansprüche

1. Isolations-Sicherheitstrennschalter (100), umfassend:
- einen kompletten Unterteil (1), an dem Anschluss- und L1-Abflussschienen (5.1, 5.2, 5.3; 6) sowie Kontaktabschirmungen (7.1, 7.2, 7.3) und Schnellmontage-Module (8.1, 8.2, 8.3) angeordnet sind,
- wobei die Schnellmontage-Module (8.1, 8.2, 8.3) jeweils aus einem Gehäusekorpus (9) und einer Schraube (10) bestehen,
**dadurch gekennzeichnet, dass**
- der Gehäusekorpus (9) einen rechteckigen Plattenkörper (11) und einen senkrecht zum Plattenkörper (11) gerichteten Leitkanal (12) zur Aufnahme der Schraube (10) aufweist,
- am Plattenkörper (11) wenigstens ein elastisches Stegelement (14) angebracht ist, welches mit seinem freien Ende (15) mit der Schraube (10) kontaktiert und die Schraube (10) vor dem Herausfallen aus dem Gehäusekorpus (9) sichert.

2. Isolations-Sicherheitstrennschalter (100) nach Anspruch 1, **dadurch gekennzeichnet, dass** die Schraube (10) einen Kragen (17) aufweist, an dem sich das Stegelement (14) abstützt.

3. Isolations-Sicherheitstrennschalter (100) nach Anspruch 1, **dadurch gekennzeichnet, dass** der Leitkanal (12) von einer Hülse (22) umschlossen ist, welche wenigstens eine, längs ihrer Mantellinie verlaufende Aussparung (20) aufweist, deren Breite es erlaubt, das freie Ende (15) des elastischen Stegelementes (14) aufzunehmen.

4. Isolations-Sicherheitstrennschalter (100) nach Anspruch 3, **dadurch gekennzeichnet, dass** die Hülse (22) stoffschlüssig mit dem Plattenkörper (11) verbunden ist.

5. Isolations-Sicherheitstrennschalter (100) nach Anspruch 3, **dadurch gekennzeichnet, dass** die Aussparungen (20) an der Hülse (22) in Projektion auf eine Flachseite (24) des Plattenkörpers (11) an einer diagonal zur Hülse (22) verlaufenden Symmetrieachse (13) des Plattenkörpers (11) angeordnet sind.

6. Isolations-Sicherheitstrennschalter (100) nach Anspruch 1, **dadurch gekennzeichnet, dass** das elastische Stegelement (14) stoffschlüssig mit dem Plattenkörper (11) verbunden ist.

7. Isolations-Sicherheitstrennschalter (100) nach Anspruch 6, **dadurch gekennzeichnet, dass** das elastische Stegelement (14) senkrecht zu einem länglichen Vorsprung (23) des Plattenkörpers (11) angeordnet ist.

## Claims

1. Safety isolation disconnection switch (100), comprising:
- a complete lower part (1), on which connecting rails and L1-drain rails (5.1, 5.2, 5.3; 6) and contact shields (7.1, 7.2, 7.3) and rapid mounting modules (8.1, 8.2, 8.3) are arranged,
- wherein the rapid mounting modules (8.1, 8.2, 8.3) each consist of a housing body (9) and a screw (10),
**characterised in that**
- the housing body (9) comprises a rectangular plate body (11) and a guide channel (12) which is oriented perpendicularly to the plate body (11) and is intended to receive the screw (10),
- at least one elastic web element (14) is attached to the plate body (11) and, with its free end (15), contacts the screw (10) and secures the screw (10) against falling out of the housing body (9).

2. Safety isolation disconnection switch (100) as claimed in claim 1, **characterised in that** the screw (10) has a collar (17) against which the web element (14) is supported.

3. Safety isolation disconnection switch (100) as claimed in claim 1, **characterised in that** the guide channel (12) is surrounded by a sleeve (22) which comprises at least one aperture (20) extending along its surface line and the width of which permits it to receive the free end (15) of the elastic web element (14).

4. Safety isolation disconnection switch (100) as claimed in claim 3, **characterised in that** the sleeve (22) is integrally bonded with the plate body (11).

5. Safety isolation disconnection switch (100) as claimed in claim 3, **characterised in that** the apertures (20) are disposed on the sleeve (22) in a projection onto a flat side (24) of the plate body (11) on an axis of symmetry (13) of the plate body (11) extending diagonally with respect to the sleeve (22).

6. Safety isolation disconnection switch (100) as claimed in claim 1, **characterised in that** the elastic web element (14) is integrally bonded to the plate body (11).

7. Safety isolation disconnection switch (100) as claimed in claim 6, **characterised in that** the elastic web element (14) is disposed perpendicularly to a longitudinal projection (23) of the plate body (11).

## Revendications

1. Disjoncteur d'isolation de sécurité (100) comprenant une base complète (1) sur laquelle sont agencés des coulisses de connexion et des coulisses L1 de décharge (5.1, 5.2, 5.3 ; 6) ainsi que des caches protecteurs de contact (7.1, 7.2, 7.3) et des modules de montage rapide (8.1, 8.2, 8.3), dans lequel chacun des modules de montage rapide (8.1, 8.2, 8.3) est composé d'un corps de boîtier (9) et d'une vis (10), **caractérisé**
- **en ce que** le corps de boîtier (9) est doté d'une plaque (11) rectangulaire et d'un conduit (12), ce dernier étant disposé perpendiculairement à la plaque (11) et destiné à loger la vis (10) et
- **en ce qu'**il est agencé sur la plaque (11) au moins une entretoise élastique (14) dont l'extrémité libre (15) est en contact avec la vis (10) et empêche celle-ci de tomber du corps de boîtier (9).

2. Disjoncteur (100) selon la revendication 1, **caractérisé en ce que** la vis (10) est dotée d'un collet (17) contre lequel s'appuie l'entretoise (14).

3. Disjoncteur (100) selon la revendication 1, **caractérisé en ce que** le conduit (12) est entouré d'une douille (22) dans laquelle est ménagée, le long de sa génératrice, au moins un évidement (20) dont la largeur permet de loger l'extrémité libre (15) de l'entretoise élastique (14).

4. Disjoncteur (100) selon la revendication 3, **caractérisé en ce que** la douille (22) est jointe à la plaque (11) par alliance de matière.

5. Disjoncteur (100) selon la revendication 3, **caractérisé en ce que** les évidements (20) sur la douille (22) sont disposés, en projection sur un côté plat (24) de la plaque (11), sur un axe de symétrie (13) de ladite plaque (11) suivant un tracé diagonal à la douille (22).

6. Disjoncteur (100) selon la revendication 1, **caractérisé en ce que** l'entretoise élastique (14) est jointe à la plaque (11) par alliance de matière.

7. Disjoncteur (100) selon la revendication 6, **caractérisé en ce que** l'entretoise élastique (14) est disposée perpendiculairement à un taquet oblong (23) agencé sur la plaque (11).
